# EUROPEAN PATENT APPLICATION

(11) **EP 4 369 440 A1**
(43) Date of publication of application: **15.05.2024**
(21) Application number: 23798875.3
(22) Date of filing: 29.08.2023
(51) Int. Cl.: H01M 4/525, H01M 4/505, H01M 10/052

(54) **HIGH-NICKEL TERNARY POSITIVE ELECTRODE MATERIAL, PREPARATION METHOD THEREFOR AND USE THEREOF, AND LITHIUM BATTERY**

(30) Priority: 27.09.2022 CN 202211180652
(71) Applicant: Tianjin B&M Science And Technology Co., Ltd., Tianjin 300384 (CN)
(72) Inventor: CHEN, Penghui, Tianjin 300384 (CN); YU, Limei, Tianjin 300384 (CN); LV, Fei, Tianjin 300384 (CN); XU, Ning, Tianjin 300384 (CN)
(74) Representative: Gill Jennings & Every LLP
(86) International application number: PCT/CN2023/115510
(87) International publication number: WO 2024/066867

(57) **Abstract**

The present application relates to a high nickel ternary cathode material, a preparation method and use thereof, and a lithium battery. The high nickel ternary cathode material includes an O3-type high nickel ternary cathode material and a coating layer coating the O3-type high nickel ternary cathode material. The material of the coating layer includes a P2-type layered oxide. The chemical formula of the O3-type high nickel ternary cathode material is LiNiₓCo_{y}M_{1-x-y}O₂, where 0.8≤x<0.96, 0≤y<0.2, and M includes one or more of Mn, Al, W, Nb and Zr. The chemical formula of the P2-type layered oxide is Na_{2/3}NiₐMn₁₋ₐO₂, where 0.1≤a≤0.5.

## Description

### CROSS-REFERENCE TO RELATED APPLICATIONS

This application claims priority to Chinese patent application No. 202211180652.9, filed on September 27, 2022, and titled "HIGH NICKEL TERNARY CATHODE MATERIAL, PREPERATION METHOD AND USE THEREOF, AND LITHIUM BATTERY", the contents of which is hereby incorporated by reference in its entirety.

### TECHNICAL FIELD

The present application relates to the technical field of lithium battery, and particularly to a high nickel ternary cathode material, a preparation method and use thereof, and a lithium battery.

### BACKGROUND

The cathode material is generally considered to be the most critical component affecting the cost and capacity of a full cell. Currently, the commonly used cathode materials mainly include lithium cobalt oxide cathode materials, ternary cathode materials, etc. Among them, the cobalt containing cathode materials such as lithium cobalt oxide (LiCoO₂, LCO) are expensive and difficult to meet the requirements of large-scale energy storage equipment and electric vehicles. Compared with the expensive LCO, the ternary cathode materials such as high nickel ternary cathode materials have lower cost and higher energy density, and have become one of the mainstream cathode materials for power batteries. However, the increase of nickel content (>80%) in the bulk phase of the high nickel ternary cathode materials, though resulting in high performance, brings about significant challenges such as short cycle life, poor rate capability, and occurrence of interface side reactions.

A basic strategy for improving lithium storage performance and thermal safety of the high nickel ternary cathode materials is to regulate the surface/interface chemical stability and electrochemical performance of the cathode active material particles. Surface coating is considered to be a common and effective way for improving the surface/interface stability and charge transport. Although various surface treatment methods and coating materials have been proposed to improve the interface stability and electrochemical performance of the high nickel ternary cathode materials, it is still a challenge to coat the surface of the high nickel ternary cathode materials with a uniform, stable, and controllable coating at an industrial scale and a low cost. Moreover, most currently available coating methods do not involve modification of the bulk phase of the cathode materials. In addition, due to the high sensitivity of the high nickel ternary cathode materials to water, the wet coating process may cause structural defects and impurities in the cathode materials, making it difficult to achieve a uniform and stable coating.

### SUMMARY

In view of the above, there is a need to provide a high nickel ternary cathode material, a preparation method and use thereof, and a lithium battery.

In one aspect, the present application provides a high nickel ternary cathode material, including an O3-type high nickel ternary cathode material and a coating layer coated on the O3-type high nickel ternary cathode material. The material of the coating layer includes a P2-type layered oxide. The chemical formula of the O3-type high nickel ternary cathode material is Li_{w}NiₓCo_{y}M_{1-x-y}O₂, where 0.95≤w≤1.05, 0.8≤x<0.96, 0≤y<0.2, and M includes one or more of Mn, Al, W, Nb and Zr. The chemical formula of the P2-type layered oxide is Na_{2/3}NiₐMn_{1.a}O₂, where 0.1≤a≤0.5.

In some embodiments, the thickness of the coating layer is in a range of 5 nm to 30 nm.

In some embodiments, the weight ratio of the O3-type high nickel ternary cathode material to the P2-type layered oxide is (0.8 to 1.0): (0.03 to 0.08).

In some embodiments, the O3-type high nickel ternary cathode material is in the form of secondary particles, and the coating layer is coated on the surface of the O3-type high nickel ternary cathode material and the space between the primary particles of the O3-type high nickel ternary cathode material.

In some embodiments, w=1, the chemical formula of the high nickel ternary cathode material is LiNiₓCo_{y}Mn_{1-x-y}O₂.

In another aspect, the present application provides a method for preparing the above-described high nickel ternary cathode material, including steps of: dissolving a sodium salt, a nickel salt, a manganese salt, and the O3-type high nickel ternary cathode material in an organic solvent to react, and then drying and sintering. The molar ratio of the sodium salt, the nickel salt, and the manganese salt is 2/3: a: (1-a), where 0.1≤a≤0.5.

In some embodiments, the O3-type high nickel ternary cathode material is prepared by a method including steps of: mixing a lithium source with Ni_{b}Co_{c}M_{1-b-c}(OH)₂ and then sintering in an oxygen-containing atmosphere, where 0.8≤b<0.96, 0≤c< 0.2, and M includes one or more of Mn, Al, W, Nb and Zr.

In some embodiments, the molar ratio of the lithium source to Ni_{b}Co_{c}M_{1-b-c}(OH)₂ is in a range of 1.01:1 to 1.06:1.

In some embodiments, the lithium source includes one or more of lithium hydroxide, lithium carbonate, lithium acetate, and lithium nitrate.

In some embodiments, the step of sintering is performed at a temperature in a range of 650 °C to 900 °C for 10 hours to 20 hours, with a temperature raising rate in a range of 1 °C/min to 5 °C/min.

In some embodiments, the sodium salt includes one or more of sodium acetate, sodium acetate trihydrate, sodium carbonate, and sodium nitrate.

In some embodiments, the nickel salt includes one or more of nickel acetate, nickel acetate tetrahydrate, nickel carbonate, nickel nitrate, and nickel nitrate hexahydrate.

In some embodiments, the manganese salt includes one or more of manganese acetate, manganese acetate tetrahydrate, manganese nitrate, and manganese nitrate hexahydrate.

In some embodiments, the organic solvent includes one or more of ethanol, N-methyl pyrrolidone, and acetone.

In some embodiments, the step of sintering is performed at a temperature in a range of 650 °C to 750 °C for 2 hours to 5 hours, with a temperature raising rate in a range of 1 °C/min to 5 °C/min.

In still another aspect, the present application provides a cathode including the above-described high nickel ternary cathode material.

In yet another aspect, the present application further provides a lithium battery, including the above-described cathode.

In some embodiments of the present application, the high nickel ternary cathode material includes the coating layer made of a P2-type Na_{2/3}NiₐMn₁₋ₐO₂ (NNMO), coated on the O3-type high nickel ternary cathode material. The exchange of Na⁺ with Li⁺ can occur spontaneously between the P2-Type NNMO coating layer and the O3-type high nickel ternary cathode material during the process of charging and discharging, forming an irreversible O2-type LNMO coating layer from the P2-type NNMO coating layer. During the charging and discharging process, due to the specific stack order of oxygen atoms, the O2-type LNMO coating layer can effectively prevent the transition of the high nickel ternary cathode material from the initial layered structure to a spinel phase or a rock-salt phase, thus improving not only the surface/interface chemical stability but also the structure of bulk phase of the high nickel ternary cathode material, and improving the cycling stability thereof.

Moreover, in some embodiments of the present application, wet coating with an organic solvent is used, and that is, the entire coating process is performed in the organic solvent, which can completely impregnate the high nickel ternary cathode material. The method omits a step of high-temperature reaction, simplifying the operation, and reducing the energy loss and preparation cost as compared with the conventional high-temperature sintering without inducing structural defects and impurities in the high nickel ternary cathode material, ensuring uniformity and stability of the coating. In addition, the two-step sintering allows for the production of the coating modified high nickel ternary cathode material. Compared with the conventional three-step sintering, this approach simplifies the process and reduces the cost, while ensuring the high-temperature cycling stability of the high nickel ternary cathode material.

### BRIEF DESCRIPTION OF THE DRAWINGS

In order to illustrate the embodiments of the present application or the technical solution in the prior art more clearly, the drawings to be referred in description of the embodiments or the prior art will be described briefly. Apparently, the following described drawings are merely for some embodiments of the present application, and other drawings can be derived by those of ordinary skilled in the art without any creative effort.
FIG. 1 is an SEM image of a high nickel ternary cathode material prepared in Example 1.
FIG. 2 is an SEM image of a high nickel ternary cathode material prepared in Comparative Example 1.
FIG. 3 is a comparison graph of high-temperature cycling performance curves between a button-cell assembled from the NCM@NNMO prepared in Example 1 and a button-cell assembled from the NCM prepared in Comparative Example 1.

### DETAILED DESCRIPTION

The present application will now be described in detail with reference to the accompanying drawings in order to facilitate the understanding of the present application. The drawings show some preferred embodiments of the present application. However, the present application may be implemented in many different forms and is not limited to the embodiments described herein. In contrast, the specific embodiments provided herein are only for understanding the disclosure of the present application more thoroughly and comprehensively.

Unless otherwise indicated, all technical and scientific terms used herein have the same meaning as those normally understood by those of ordinary skilled in the art. The terms used herein in the specification of the present application are for the purpose of describing specific embodiments only and are not intended to limit the present application. The term "and/or" as used herein includes any and all combinations of one or more relevant listed items.

### Terms and definition

"@" represents coating, as an example, NCM@NNMO means that NCM is coated with NNMO.

A "layered oxide" refers to an oxide having a layered crystal structure, in which alkali metal (e.g., Na and/or Li) atoms occupy one layer of the material lattice, and transition metal atoms occupy a different layer. The layered structure allows the alkali metal (e.g., Na and/or Li) being inserted into and extracted out of the lattice easily.

"P2", "P3", and "O3" are designations for different layered crystal structures. "P" refers to that the alkali metal locates in a prismatic site of the lattice, whereas "O" refers to that the alkali metal locates in an octahedral site. The number "2" or "3" refers to the number of layers in a repeating unit. For example, "2" generally means a repetition in an "ABABAB" manner (or some other variation), and "3" generally means a repetition in an "ABCABCABC" manner.

Conventional high nickel ternary cathode materials are typically secondary spherical particles composed of nanoparticles, and the electrochemical properties of the high nickel ternary cathode materials are related to the surface stability of active particles therein. However, the applicant of the present application found that during the synthesis and the following charging and discharging in electrolyte, the high nickel ternary cathode materials undergoes a surface reconstruction, including a transition from a layered hexagonal structure to a spinel phase and a rock-salt phase caused by Li-Ni mixed arrangement. Surface reconstruction may block the lithium transport pathways, further leading to the deterioration of the capacity and rate performanceof the cathode material. Although there are studies on coating the surface of the high nickel ternary cathode materials with lithium ion conductors, such as LiV₂O₄, LiAlO₂, LiBO₂, Li_{1.4}Y_{0.4}Ti_{1.6}(PO₄)₃ and Li_{1.8}Sc_{0.8}Ti_{1.2}(PO₄)₃ and so on, none have considered the bulk phase structure of the high nickel ternary cathode materials, such as ion mixed arrangement, lattice parameters, phase transitions, and chemical bonding. Moreover, structural defects and impurities in the cathode materials may occur during the conventional wet coating process, and it is difficult to achieve a uniform and stable coating.

Therefore, an embodiment of the present application provides a high nickel ternary cathode material. The high nickel ternary cathode material includes an O3-type high nickel ternary cathode material and a coating layer coated on the O3-type high nickel ternary cathode material. The material of the coating layer includes a P2-type layered oxide. The O3-type high nickel ternary cathode material is represented by a chemical formula of Li_{w}NiₓCo_{y}M_{1-x-y}O₂, where 0.95≤w≤1.05, 0.8≤x<0.96, 0≤y<0.2. When w=1, the chemical formula of the O3-type high nickel ternary cathode material is LiNiₓCo_{y}M_{1-x-y}O₂. M includes one or more of Mn, Al, W, Nb and Zr. The P2-type layered oxide is represented by a chemical formula of Na_{2/3}NiₐMn_{1.a}O₂, where 0.1≤a≤0.5.

The material including P2-type Na_{2/3}NiₐMn₁₋ₐO₂ (NNMO) is used as the coating layer for the O3-type high nickel ternary cathode material. The exchange between Na⁺ and Li⁺ can occur spontaneously between the P2-Type NNMO coating layer and the O3-type high nickel ternary cathode material during the process of charging and discharging, forming an irreversible O2-type LNMO coating layer from the P2-type NNMO coating layer. During the charging and discharging process, due to the specific stack order of oxygen atoms, the O2-type LNMO coating layer can effectively prevent the transition of the high nickel ternary cathode material from the initial layered structure into a spinel phase or a rock-salt phase, thus improving not only the surface/interface chemical stability but also the structure of bulk phase of the high nickel ternary cathode material, and improving the cycling stability thereof.

In some embodiments, the thickness of the coating layer can be any value between 5 nm and 30 nm, such as 5 nm, 8 nm, 10 nm, 20 nm, or 30 nm. The thickness of the coating layer is controlled in this range, which can ensure that the high nickel ternary cathode material has excellent ionic conductivity and thus has high activity.

In some embodiments, the weight ratio of the O3-type high nickel ternary cathode material to the P2-type layered oxide is (0.8 to 1.0): (0.03 to 0.08).

In some embodiments, the O3-type high nickel ternary cathode material is in the form of secondary particles, and the coating layer is coated on the surface of the O3-type high nickel ternary cathode material and the space between primary particles of the O3-type high nickel ternary cathode material. That is, the O3-type high nickel ternary cathode material are the secondary particles aggregated from the primary particles. The primary particles have various orientations, and pores exist between the primary particles. The coating layer not only coats the surface of the O3-type high nickel ternary cathode material, but also the pores between the primary particles, so that a P2-O3 type two-phase structure can be formed on the contact surface between the coating layer and the primary particles, and that an O2-O3 type two-phase structure can be further formed between the coating layer and the primary particles during the charging and discharging process. This effectively prevents the transition of the high nickel ternary cathode material from the initial layered structure to a spinel phase or a rock-salt phase during the charging and discharging process, and effectively retains the surface structure of the high nickel ternary cathode material as a whole and the Li⁺ diffusion channels of the material, thereby improving the high-temperature cycling stability.

An embodiment of the present application further provides a method for preparing the high nickel ternary cathode material as described above. The method includes steps of: dissolving a sodium salt, a nickel salt, a manganese salt, and the O3-type high nickel ternary cathode material in an organic solvent to react, and then drying and sintering. The molar ratio of the sodium salt, the nickel salt, and the manganese salt is 2/3: a: (1-a), where 0.1≤a≤0.5.

In the embodiments of the present application, wet coating with an organic solvent is used, and that is, the entire coating process is performed in the organic solvent, which can completely impregnate the high nickel ternary cathode material. The method omits a step of high-temperature reaction, simplifying the operation, and reducing the energy loss and preparation cost as compared with the conventional high-temperature sintering without inducing structural defects and impurities in the high nickel ternary cathode material, ensuring uniformity and stability of the coating. In addition, the two-step sintering (including the sintering step in the synthesis of the O3-type high nickel ternary cathode material) allows for the production of the coating modified high nickel ternary cathode material. Compared with the conventional three-step sintering, this approach simplifies the process and reduces the cost, while ensuring the high-temperature cycling stability of the high nickel ternary cathode material.

In some embodiments, the specific type of the sodium salt, the nickel salt, and the manganese salt is not limited, and any metal salts known in the art, for example, metal salts and/or hydrated metal salts, can be selected. The sodium salts can specifically include one or more of sodium acetate, sodium acetate trihydrate, sodium carbonate, and sodium nitrate. The nickel salts can include one or more of nickel acetate, nickel acetate tetrahydrate, nickel carbonate, nickel nitrate, and nickel nitrate hexahydrate. The manganese salts can include one or more of manganese acetate, manganese acetate tetrahydrate, manganese nitrate, and manganese nitrate hexahydrate.

It can be understood that the O3-type high nickel ternary cathode material can be selected from any known O3-type high nickel ternary cathode material in the art, or can be prepared by a method including steps of: mixing a lithium source with Ni_{b}Co_{c}M_{1-b-c}(OH)₂ and then sintering in an oxygen-containing atmosphere, where 0.8≤b<0.96, 0≤c<0.2, and M includes one or more of Mn, Al, W, Nb and Zr.

In some embodiments, the molar ratio of the lithium source to Ni_{b}Co_{c}M_{1-b-c}(OH)₂ is any value in a range of 1.01:1 to 1.06:1, such as 1.02:1, 1.03:1, 1.04:1, or 1.05:1.

It can be understood that the lithium source is not specifically limited, but can be selected from any known lithium-containing compound in the art. For example, the lithium source can include one or more of lithium hydroxide, lithium carbonate, lithium acetate, and lithium nitrate.

In some embodiments, the step of sintering can be performed at a temperature in a range of 650 °C to 900 °C for 10 hours to 20 hours, with a temperature raising rate in a range of 1 °C/min to 5 °C/min.

In some embodiments, the oxygen-containing atmosphere can be air and/or oxygen, and the oxygen content in the oxygen-containing atmosphere is larger than or equal to 97 vol%.

In some embodiments, the method for mixing the lithium source with Ni_{b}Co_{c}M_{1-b-c}(OH)₂ is not limited, as long as they can be uniformly mixed together. For example, an air flow method (a dry method) can be used for the mixing, therein at a rotating speed of 500 rpm to 1000 rpm for 20 min to 60 min.

It can be understood that after the sintering, the method can also include the steps of cooling, crushing, and sieving with a 200 to 400 mesh sieve.

In some embodiments, the organic solvent can be any known organic solvent in the art, and optionally can be a volatile organic solvent. For example, the organic solvent can include but is not limited to one or more of ethanol, N-methyl pyrrolidone, and acetone. For example, the organic solvent can be ethanol.

In some embodiments, the step of drying can be air drying or heating drying, as long as the organic solvent can be removed. The temperature of the heating drying can be in a range of 100°C to 120°C.

In some embodiments, the step of sintering can be performed at a temperature in a range of 650 °C to 750 °C for 2 hours to 5 hours, with a temperature raising rate in a range of 1 °C/min to 5 °C/min.

It can be understood that after the sintering, the method can further include the steps of cooling, crushing, and sieving with a 200 to 400 mesh sieve.

For the third purpose of the present application, a cathode including the high nickel ternary cathode material as described above is further provided.

For the fourth purpose of the present application, a lithium battery including the cathode as described above is provided.

The present application is further detailed in combination with the following examples.

### Example 1

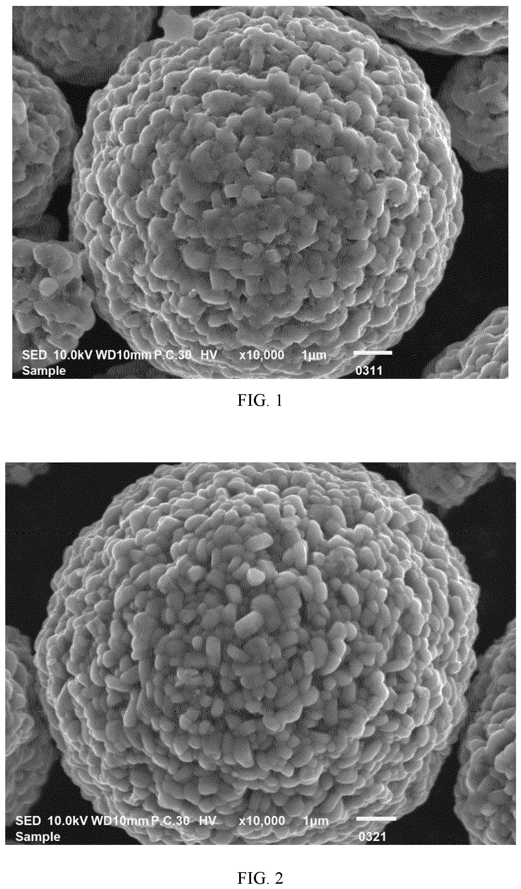

1.1 Ni_{0.83}Co_{0.06}Mn_{0.11}(OH)₂ as a ternary precursor and LiOH·H₂O are weighed at a molar ratio of 1:1.04, and mixed in an air flow mixer with a rotating speed of 850 rpm for 40 min to prepare a mixed material A.
1.2 The mixed material A prepared in step 1.1 is transferred to a controlled atmosphere furnace, heated up to 750 °C at a temperature raising rate of 2.5 °C/min, and sintered at 750 °C for 13.5 hours. The oxygen content in the controlled atmosphere furnace is 99 vol%. The material is cooled with the furnace to achieve the high nickel cathode material NCM (LiNi_{0.83}Co_{0.06}Mn_{0.11}O₂).
1.3 Sodium acetate trihydrate, nickel acetate tetrahydrate, and manganese acetate tetrahydrate are weighed at the mole ratio of 2/3:0.33:0.67 and dissolved in 100 mL ethanol to form a mixed solution. Then, the high nickel cathode material NCM prepared in step 1.2 is weighed and added to the mixed solution, wherein the molar ratio of sodium acetate trihydrate to the high nickel cathode material NCM is 1:110. The mixed solution added with the sodium acetate trihydrate is stirred at 110 °C until ethanol is completely volatilized to achieve a mixed material B.
1.4 The mixed material B prepared in step 1.3 is sintered at 700 °C in an oxygen-containing atmosphere, cooled, crushed, and sieved, thereby obtaining the coating modified high nickel ternary cathode material (NCM@NNMO). The SEM image of the high nickel ternary cathode material is shown in FIG.1, with a magnification of 10, 000 x.

### Example 2

1.1 Ni_{0.8}Co_{0.01}Al_{0.1}(OH)₂ as a ternary precursor and LiOH·H₂O are weighed at a molar ratio of 1:1.02, and mixed in an air flow mixer with a rotating speed of 850 rpm for 40 min to prepare a mixed material A.
1.2 The mixed material A prepared in step 1.1 is transferred to a controlled atmosphere furnace, heated up to 750 °C at a temperature raising rate of 2.5 °C/min, and sintered at 750 °C for 13.5 hours. The oxygen content in the controlled atmosphere furnace is 99 vol%. The material is cooled with the furnace to achieve the high nickel cathode material NCA (LiNi_{0.8}Co_{0.1}Al_{0.1}O₂).
1.3 Sodium acetate trihydrate, nickel acetate tetrahydrate, and manganese acetate tetrahydrate are weighed at the mole ratio of 2/3:2/9:7/9 and dissolved in 100 mL ethanol to form a mixed solution. Then, the high nickel cathode material NCA prepared in step 1.2 is weighed and added to the mixed solution, wherein the molar ratio of sodium acetate trihydrate to the high nickel cathode material NCA is 1:92. The mixed solution added with the sodium acetate trihydrate is stirred at 110 °C until the ethanol is completely volatilized to achieve a mixed material B.
1.4 The mixed material B prepared in step 1.3 is sintered at 700 °C in an oxygen-containing atmosphere, cooled, crushed by a double roller and by ultracentrifugally grinding, and sieved at 325 mesh, thereby obtaining the coating modified high nickel ternary cathode material (NCA@NNMO).

### Example 3

1.1 Ni_{0.96}Co_{0.02}Mn_{0.01}Zr_{0.01}(OH)₂ as a ternary precursor and LiOH·H₂O are weighed at a molar ratio of 1:1.04, and mixed in an air flow mixer with a rotating speed of 850 rpm for 40 min to prepare a mixed material A.
1.2 The mixed material A prepared in step 1.1 is transferred to a controlled atmosphere furnace, heated up to 800 °C at a temperature raising rate of 2.5 °C/min, and sintered at 800 °C for 13.5 hours. The oxygen content in the controlled atmosphere furnace is 99 vol%. The material is cooled with the furnace to achieve the high nickel cathode material Zr-NCM (LiNi_{0.96}Co_{0.02}Mn_{0.01}Zr_{0.01}O₂).
1.3 Sodium acetate trihydrate, nickel acetate tetrahydrate, and manganese acetate tetrahydrate are weighed at the mole ratio of 2/3:0.5:0.5 and dissolved in 100 mL ethanol to form a mixed solution. Then, the high nickel cathode material Zr-NCM prepared in step 1.2 is weighed and added to the mixed solution, wherein the molar ratio of sodium acetate trihydrate to the high nickel cathode material Zr-NCM is 1:104. The mixed solution added with the sodium acetate trihydrate is stirred at 110 °C until the ethanol is completely volatilized to achieve a mixed material B.
1.4 The mixed material B prepared in step 1.3 is sintered at 700 °C in an oxygen-containing atmospher, cooled, crushed by a double roller and by ultracentrifugally grinding, and sieved at 325 mesh, thereby obtaining the coating modified high nickel ternary cathode material (Zr-NCM@NNMO).

### Comparative Example 1

The prepared method in Comparative Example 1 is substantially the same as that in Example 1, except that no coating for modification is performed. The method includes the following steps.
1.1 Ni_{0.83}Co_{0.06}Mn_{0.11}(OH)₂ as a ternary precursor and LiOH·H₂O are weighed at a molar ratio of 1:1.04, and mixed in an air flow mixer with a rotating speed of 850 rpm for 40 min to prepare a mixed material A.
1.2 The mixed material A prepared in step 1.1 is transferred to a controlled atmosphere furnace, heated up to 550 °C at a temperature raising rate of 2.5 °C/min, and sintered at 550 °C for 5.5 hours, and then heated up to 760 °C at a temperature raising rate of 2.5 °C/min, and sintered at 760 °C for 13.5 hours. The oxygen content in the controlled atmosphere furnace is 99 vol%. The material is cooled with the furnace to achieve the high nickel cathode material (LiNi_{0.83}Co_{0.06}Mn_{0.11}O₂).
1.3 The high nickel cathode material prepared in step 1.2 is crushed by a double roller and by ultracentrifugally grinding, and sieved at 325 mesh, thereby obtaining the high nickel ternary cathode material (NCM). The SEM image of the high nickel ternary cathode material is shown in FIG. 1, with a magnification of 10, 000 x.

### Comparative Example 2

The prepared method in Comparative Example 2 is substantially the same as that in Example 2, except that no coating for modification is performed. The method includes the following steps.
1.1 Ni_{0.8}Co_{0.1}Al_{0.1}(OH)₂ as a ternary precursor and LiOH·H₂O are weighed at a molar ratio of 1:1.02, and mixed in an air flow mixer with a rotating speed of 850 rpm for 40 min to prepare a mixed material A.
1.2 The mixed material prepared in step 1.1 is transferred to a controlled atmosphere furnace, heated up to 750 °C at a temperature raising rate of 2.5 °C/min, and sintered at 750 °C for 13.5 hours. The oxygen content in the controlled atmosphere furnace is 99 vol%. The material is cooled with the furnace to achieve the high nickel cathode material (LiNi_{0.08}Co_{0.1}Al_{0.1}O₂).
1.3 The high nickel cathode material prepared in step 1.2 is crushed by a double roller and by ultracentrifugally grinding, and sieved at 325 mesh, thereby obtaining the high nickel ternary cathode material (NCA).

### Comparative Example 3

The prepared method in Comparative Example 3 is substantially the same as that in Example 3, except that no coating for modification is performed. The method includes the following steps.
1.1 Ni_{0.96}Co_{0.02}Mn_{0.01}Zr_{0.01}(OH)₂ as a ternary precursor and LiOH·H₂O are weighed at a molar ratio of 1:1.04, and mixed in an air flow mixer with a rotating speed of 850 rpm for 40 min to prepare a mixed material A.
1.2 The mixed material A prepared in step 1.1 is transferred to a controlled atmosphere furnace, heated up to 800 °C at a temperature raising rate of 2.5 °C/min, and sintered at 800 °C for 13.5 hours. The oxygen content in the controlled atmosphere furnace is 99 vol%. The material is cooled with the furnace to achieve the high nickel cathode material (LiNi_{0.96}Co_{0.02}Mn_{0.01}Zr_{0.01}O₂).
1.3 The high nickel cathode material prepared in step 1.2 is crushed by a double roller and by ultracentrifugally grinding, and sieved at 325 mesh, thereby obtaining the high nickel ternary cathode material (Zr-NCM).

### Performance Tests:

As shown in FIGs. 1 and 2, the prepared high nickel ternary cathode materials are all secondary microspheres aggregated of primary nanoparticles, with an average size of about 10 µm. In addition, by comparing FIG. 1 with FIG. 2, it can be found that, as compared with the NCM high nickel ternary cathode material prepared in Comparative Example 1, the surface of the primary particles of the coating modified NCM@NNMO prepared in Example 1 is more grainy, and the surface of the primary particles of the high nickel ternary cathode material is smoother. This is mainly due to the coating of the P2-type NNMO on the surface of the primary particles of the NCM high nickel ternary cathode material.

Electrochemical performance test: the test conditions for a button cell is that for a CR2032 button cell, the voltage range is from 2.5V to 4.25 V vs. Li⁺/Li, and the charging and discharging rate is 0.5 C.

The preparation of a button cell:
A cathode plate is prepared by mixing a high nickel ternary cathode material with a conductive agent and PVDF, at a weight ratio of 96.5:1.5:2. Compared with the conventional cathode plate in which the weight ratio of the conventional cathode material: conductive agent: PVDF is 85:10:5, the amount of the conductive agent is significantly reduced due to the improvement of the conductivity of the high nickel ternary cathode material, which effectively improves the energy density of the battery. The assembly of the button cell follows the order of upper cover - spring - steel sheet - lithium sheet (with electrolyte) - separator (with electrolyte) - cathode plate - bottom cover.

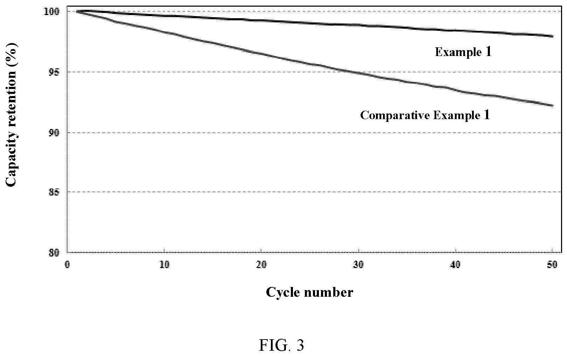

FIG. 3 shows a cycling stability comparison graph of the button cell formed with NCM@NNMO prepared in Example 1 and the button cellformed with NCM prepared in Comparative Example 1, cycled 50 times at a current density of 0.5 C and a temperature of 45°C. As can be seen from FIG. 3, the capacity retentions of NCM@NNMO and NCM after 50 cycles at the high temperature and the 0.5C current density are 97.9% and 92.6%, respectively. Moreover, compared with the uncoated high nickel ternary cathode material prepared in Comparative Example 1, the cycling stability of the high nickel ternary cathode material coated with P2-type NNMO prepared in Example 1 is significantly improved. This is mainly because during the process of charging and discharging, the initial P2-type NNMO coating layer undergoes spontaneous Na⁺ - Li⁺ exchange to eventually form the O2-type LNMO coating layer. The O2-type LNMO, after initial activation, exhibits highly reversible structural changes and can act as a surface/interface protective layer, which can effectively suppress the surface heat generation and release and interface side reactions of NCM, and also can effectively prevent the transition of the high nickel ternary cathode material from a layered structure to a spinel phase.

In conclusion, the present application is based on coating the high nickel ternary cathode material with the P2-type NNMO coating layer. The P2-type NNMO coating layer is formed by mild wet coating. The initial P2-type NNMO coating layer can undergoes spontaneous Na⁺ - Li⁺ exchange to eventually form the O2-type LNMO coating layer. The O2-type LNMO coating layer, after initial activation, exhibits highly reversible structural changes. As the protective layer of the high nickel ternary cathode material, O2-type LNMO can act as a surface/interface protective layer, which can effectively suppress the surface heat generation and release and interface side reactions of NCM, and can effectively prevent the transition of the high nickel ternary cathode material from a layered structure to a spinel phase. Moreover, the O2-type LNMO layer maintains excellent charge transport impedance and good Li⁺ migration rate during the battery cycling, thus significantly improving the cycling stability of the battery.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A high nickel ternary cathode material comprising an O3-type high nickel ternary cathode material and a coating layer coating the O3-type high nickel ternary cathode material, wherein the material of the coating layer comprises a P2-type layered oxide; the chemical formula of the O3-type high nickel ternary cathode material is Li_{w}NiₓCo_{y}M_{1-x-y}O₂, where 0.95≤w≤1.05, 0.8≤x<0.96, 0≤y<0.2, and M comprises one or more of Mn, Al, W, Nb and Zr; and the chemical formula of the P2-type layered oxide is Na_{2/3}NiₐMn_{1.a}O₂, where 0.1≤a≤0.5.

2. The high nickel ternary cathode material of claim 1, wherein the thickness of the coating layer is in a range of 5 nm to 30 nm.

3. The high nickel ternary cathode material of claim 1 or 2, wherein a weight ratio of the O3-type high nickel ternary cathode material to the P2-type layered oxide is (0.8 to 1.0): (0.03 to 0.08).

4. The high nickel ternary cathode material of any one of claims 1 to 3, wherein the O3-type high nickel ternary cathode material is in form of secondary particles, and the coating layer coats a surface of the O3-type high nickel ternary cathode material and fills a space between primary particles of the O3-type high nickel ternary cathode material.

5. The high nickel ternary cathode material of any one of claims 1 to 4, wherein w=1, the chemical formula of the high nickel ternary cathode material is LiNiₓCo_{y}Mn_{1-x-y}O₂.

6. A method for preparing the high nickel ternary cathode material of any one of claims 1 to 5, comprising steps of:
dissolving a sodium salt, a nickel salt, a manganese salt, and the O3-type high nickel ternary cathode material in an organic solvent to react, and then drying and sintering,
wherein a molar ratio of the sodium salt, the nickel salt, and the manganese salt is 2/3:a:(1-a), where 0.1≤a≤0.5.

7. The method of claim 6, wherein the O3-type high nickel ternary cathode material is prepared by a method comprising steps of:
mixing a lithium source with Ni_{b}Co_{c}M_{1-b-c}(OH)₂ and sintering in an oxygen-containing atmosphere, where 0.8≤b<0.96, 0≤c<0.2, and M comprises one or more of Mn, Al, W, Nb and Zr.

8. The method of claim 7, wherein a molar ratio of the lithium source to Ni_{b}Co_{c}M_{1-b-c}(OH)₂ is in a range of 1.01:1 to 1.06:1.

9. The method of claim 7 or 8, wherein the lithium source comprises one or more of lithium hydroxide, lithium carbonate, lithium acetate, and lithium nitrate.

10. The method of any one of claims 7 to 9, wherein the step of sintering is performed at a temperature in a range of 650 °C to 900 °C for 10 hours to 20 hours, with a temperature raising rate in a range of 1 °C/min to 5 °C/min.

11. The method of any one of claims 6 to 10, satisfying at least one of:
1) the sodium salt comprises one or more of sodium acetate, sodium acetate trihydrate, sodium carbonate, and sodium nitrate;
2) the nickel salt comprises one or more of nickel acetate, nickel acetate tetrahydrate, nickel carbonate, nickel nitrate, and nickel nitrate hexahydrate;
3) the manganese salt comprises one or more of manganese acetate, manganese acetate tetrahydrate, manganese nitrate, and manganese nitrate hexahydrate; and
4) the organic solvent comprises one or more of ethanol, N-methyl pyrrolidone, and acetone.

12. The method of any one of claims 6 to 11, wherein the step of sintering is performed at a temperature in a range of 650 °C to 750 °C for 2 hours to 5 hours, with a temperature raising rate in a range of 1 °C/min to 5 °C/min.

13. A cathode comprising the high nickel ternary cathode material of any one of claims 1 to 5.

14. A lithium battery comprising the cathode of claim 13.
